# EUROPÄISCHE PATENTSCHRIFT

(11) **EP 2 219 914 B1**
(45) Veröffentlichungstag und Bekanntmachung des Hinweises auf die Patenterteilung: **05.03.2014**
(21) Anmeldenummer: 08846705.5
(22) Anmeldetag: 24.09.2008
(51) Int. Cl.: B60T 8/36, F16K 31/06

(54) **MAGNETVENTIL**
SOLENOID VALVE
ÉLECTROVANNE

(30) Priorität: 08.11.2007 DE 102007053300
(43) Veröffentlichungstag der Anmeldung: 25.08.2010
(73) Patentinhaber: Robert Bosch GmbH, 70442 Stuttgart (DE)
(72) Erfinder: KRATZER, Dietmar, 71732 Tamm (DE)
(86) Internationale Anmeldenummer: PCT/EP2008/062721
(87) Internationale Veröffentlichungsnummer: WO 2009/059847

(56) Entgegenhaltungen:
- WO-A-01/00473
- WO-A-01/30626
- WO-A-98/40258
- DE-A1- 10 117 610
- DE-A1-102005 044 672
- JP-A- 2005 132 347

## Beschreibung

### Stand der Technik

Die Erfindung betrifft ein Magnetventil nach der Gattung des unabhängigen Patentanspruchs 1.

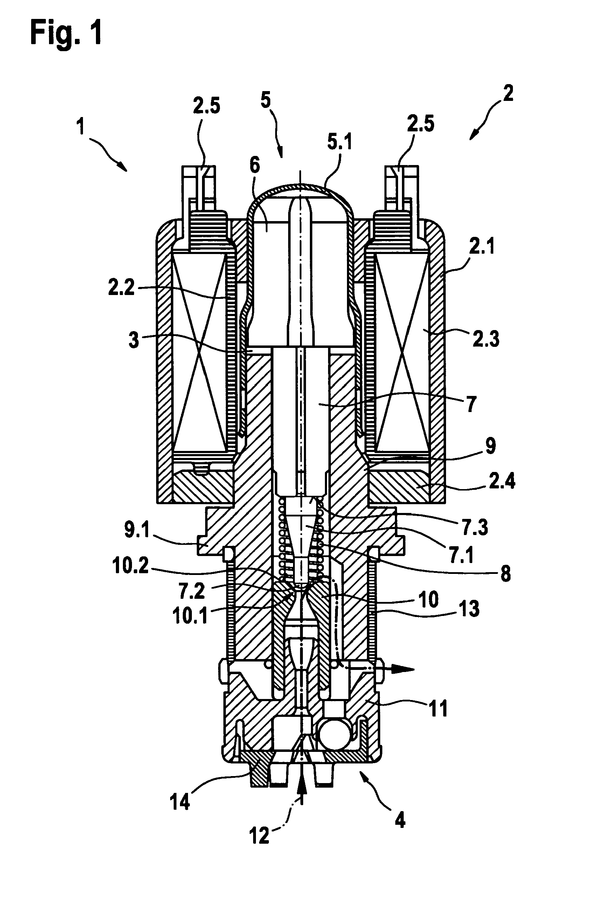

Ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst das herkömmliches Magnetventil 1, das beispielsweise als stromlos offenes Regelventil ausgeführt ist, eine Magnetbaugruppe 2 zur Erzeugung eines Magnetflusses, die einen Gehäusemantel 2.1, einen Wicklungsträger 2.2, eine Spulenwicklung 2.3 und eine Abdeckscheibe 2.4 umfasst, und eine Ventilpatrone 5, die eine Kapsel 5.1, einen mit der Kapsel über eine Dichtschweißung verbundenen Ventileinsatz 9, einen Anker 6 mit einem Stößel 7, der ein Schließelement 7.1 mit einem Hauptdichtelement 7.2 aufweist, und eine Rückstellfeder 8 umfasst. Die auf den Wicklungsträger 2.2 gewickelte Spulenwicklung 2.3 der Magnetbaugruppe 2 bildet eine elektrische Spule, die über elektrische Anschlüsse 2.5 ansteuerbar ist und einen Magnetfluss erzeugt. Der Ventileinsatz 9 leitet den von der Magnetbaugruppe 2 über die Abdeckscheibe 2.4 eingeleiteten Magnetfluss axial über einen Luftspalt 3 in Richtung Anker 6. Durch Bestromung der Spulenwicklung 2.3 über die elektrischen Anschlüsse 2.5 und den dadurch erzeugten Magnetfluss wird der Anker 6 entgegen der Kraft der Rückstellfeder 8 gegen den Ventileinsatz 9 bewegt.

Zudem nimmt der Ventileinsatz 9, der über einen Verstemmflansch 9.1 mit einem nicht dargestellten Fluidblock verstemmt ist, den so genannten Ventilkörper 10 auf, der einen Hauptventilsitz 10.1 umfasst, in welchen das Schließelement 7.1 über ein als Dichtkalotte ausgeführtes Hauptdichtelement 7.2 dichtend eintaucht, um die Dichtfunktion des Magnetventils 1 umzusetzen. Der Ventilkörper 10 ist in den Ventileinsatz 9 eingepresst, wobei der Hauptdichtsitz 10.1 oben am Ventilkörper 10 angeordnet ist. Die Rückstellfeder 8 stützt sich einerseits an einer Stößelschulter 7.3 und andererseits an einer Federauflage 10.2 auf dem Ventilkörper 10 im Bereich des Hauptventilsitzes 10.1 axial ab. Durch diese Anordnung wird die Rückstellfeder 8 im geöffneten Ventilzustand von einer Fluidströmung 12 durchströmt, wodurch sich die eingestellte Federkraft verändern kann.

Zudem ist es bekannt, ein zusätzliches Bauelement als Federauflage vorzusehen, auf dem sich die Rückstellfeder 8 abstützt, um die Rückstellfeder 8 außerhalb der Fluidströmung 12 anzuordnen. Bei einer solchen Ausführung verändert sich jedoch bei der Einstellung des Luftspaltes 3 durch Verschieben des Ventilkörpers 10 und des Stößels 7, der über das Hauptdichtelement 7.2 am Hauptventilsitz 10.1 des Ventilkörpers 10 anliegt, auch die Einbaulänge der Rückstellfeder 8 zwischen der in der Lage unveränderten Federauflage und der verschobenen Stößelschulter 7.3 und damit die eingestellte Federkraft, so dass eine entsprechende Anpassung der Position der Federauflage zur Korrektur der Federkraft nach der Einstellung des Luftspaltes erforderlich ist.

Wie weiter aus Figur 1 ersichtlich ist, umfasst das herkömmliche Magnetventil 1 ein exzentrisch angeordnetes Rückschlagventil 4, das eine richtungsorientierte Durchflussfunktion ausführt, und ein als Kunststoffeinsatz ausgeführtes Ventilbauelement, welches das Ventilunterteil 11 bildet und zur Abdichtung zu einem nicht dargestellten umgebenden Fluidblock, zur Abdichtung zum Ventilkörper 10 und zur Aufnahme eines Ringfilters 13 und eines Flachfilters 14 dient.

In der Offenlegungsschrift DE 10 2005 044 672 A1 wird beispielsweise ein Magnetventil beschrieben, welches eine Magnetbaugruppe, eine Kapsel, einen Anker und einen Ventileinsatz umfasst, der einen von der Magnetbaugruppe eingeleiteten Magnetfluss axial über einen Luftspalt in Richtung Anker leitet. Die Kapsel weist einen unteren Bereich auf, der überlappend auf den Ventileinsatz geschoben ist. Der Überlappungsbereich der Kapsel des beschriebenen Magnetventils ist in Richtung eines Verstemmbereichs verlängert, an dem die Kapsel mit einer Ventilbuchse mit einem Fluidblock verstemmt ist. Zudem ist eine Hülse mit einem Dichtsitz so in die Kapsel eingefügt, dass der Dichtsitz außerhalb des Ventileinsatzes angeordnet ist. Eine Rückstellfeder für einen Stößel kann sich im Fluidströmungsbereich im Bereich des Dichtsitzes gegen die Hülse abstützen oder kann sich außerhalb des Fluidströmungsbereichs gegen den Ventileinsatz abstützen.

In der Offenlegungsschrift JP 2005 132347 A wird ein Magnetventil mit einer Magnetbaugruppe und einer Ventilpatrone offenbart, die eine Kapsel, einen mit der Kapsel verbundenen Ventileinsatz, einen innerhalb der Kapsel beweglich angeordneten Anker, der einen Stößel mit einem ersten Schließelement und einem Hauptdichtelement umfasst, und einen Ventilkörper mit einem Hauptventilsitz umfasst, der in den Ventileinsatz eingepresst ist, wobei eine von der Magnetbaugruppe erzeugte Magnetkraft den Anker gegen die Kraft einer Rückstellfeder axial bewegt und das Hauptdichtelement dichtend in den Hauptventilsitz eintaucht. Der Ventilkörper ist als haubenförmige Hülse ausgeführt ist, wobei der Hauptventilsitz mit einer Durchgangsöffnung innen an einem haubenförmigen Ende des als haubenförmige Hülse ausgeführten Ventilkörpers angeordnet ist.

In der Offenlegungsschrift DE 101 17 610 A1 wird ein Magnetventil mit einer Magnetbaugruppe und einer Ventilpatrone, die eine Kapsel, einen mit der Kapsel verbundenen Ventileinsatz, einen innerhalb der Kapsel beweglich angeordneten Anker, der einen Stößel mit einem ersten Schließelement und einem Hauptdichtelement umfasst, und einen Ventilkörper mit einem Hauptventilsitz umfasst, der in den Ventileinsatz eingepresst ist, wobei eine von der Magnetbaugruppe erzeugte Magnetkraft den Anker gegen die Kraft einer Rückstellfeder, die außerhalb eines Fluidflusses angeordnet ist, axial bewegt und das Hauptdichtelement dichtend in den Hauptventilsitz eintaucht. Um die Rückstellfeder außerhalb des Fluidflusses anzuordnen und den Stößel zu führen ist ein als haubenförmige Hülse ausgeführter Zentrierkörper vorgesehen. Am haubenförmigen Ende des Zentrierkörpers ist eine Durchgangsöffnung vorhanden, deren Innendurchmesser zur Führung des Stößels an den Außendurchmesser des Stößels angepasst ist. Zudem stützt sich die Rückstellfeder von außen auf dem haubenförmigen Ende des Zentrierkörpers ab. Das offene Ende des haubenförmigen Zentrierkörpers ist auf einem im Außendurchmesser abgesetzten Ende des Ventilkörpers aufgepresst. Zur Fluidführung sind im oberhalb des Ventilkörpers angeordneten Teil der Mantelfläche des Zentrierkörpers entsprechende Öffnungen vorhanden.

### Offenbarung der Erfindung

Das erfindungsgemäße Magnetventil mit den Merkmalen des unabhängigen Patentanspruchs 1 hat demgegenüber den Vorteil, dass ein Ventilkörper als haubenförmige Hülse ausgeführt ist, deren offenes Ende in einen Ventileinsatz eingepresst ist und als Federauflage für eine Rückstellfeder wirkt, die außerhalb eines Fluidflusses angeordnet ist, der zwischen einem geöffneten Hauptventilsitz und mindestens einer radialen Abströmöffnung in dem als haubenförmige Hülse ausgeführten Ventilkörper auftritt. Zudem ist der Hauptventilsitz mit einer Durchgangsöffnung innen an einem haubenförmigen Ende des als Hülse ausgeführten Ventilkörpers angeordnet. Durch die erfindungsgemäße Ausführung des Magnetventils liegt die Rückstellfeder ohne ein zusätzliches Bauelement als Federauflage nicht direkt im durchströmten Bereich des Magnetventils, d.h. die Rückstellfeder liegt außerhalb des Fluidströmungsbereichs, so dass die Federkraft der Rückstellfeder in vorteilhafter Weise nicht durch die Fluidströmung beeinflusst wird. Zudem wird durch die erfindungsgemäße Ausführung des Magnetventils die eingestellte Einbaulänge der Rückstellfeder zwischen einer Stößelschulter und der Federauflage des Ventilkörpers in vorteilhafter Weise nicht verändert, wenn zur Einstellung eines Luftspaltes zwischen einem Anker und dem Ventileinsatz der Ventilkörpers und der Stößel, der über ein Hauptdichtelement an einem Hauptventilsitz des Ventilkörpers anliegt, innerhalb des Ventileinsatzes gemeinsam verschoben werden. Dadurch können in vorteilhafter Weise eine Verringerung der Prozesskomplexität und eine höhere Präzision bei der Ventileinstellung erreicht werden.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass am offenen Ende des als haubenförmige Hülse ausgeführten Ventilkörpers eine Ringnut als Federauflage ausgebildet ist, die umlaufend oder partiell ausgeführt ist. Dies ermöglicht zusätzlich zur axialen Auflage der Rückstellfeder in vorteilhafter Weise eine radiale Führung der Rückstellfeder im Auflagebereich am Ventilkörper. Alternativ kann am offenen Ende des als haubenförmige Hülse ausgeführten Ventilkörpers ein Kragen als Federauflage angeformt werden, der umlaufend oder partiell ausgeführt ist. Auch der angeformte Kragen ermöglicht zusätzlich zur axialen Auflage in vorteilhafter Weise die radiale Führung der Rückstellfeder im Auflagebereich am Ventilkörper.

In Ausgestaltung des erfindungsgemäßen Magnetventils können am offenen Ende des als haubenförmige Hülse ausgeführten Ventilkörpers Führungsmittel zur radialen Führung des Stößels angeformt werden, die umlaufend oder partiell ausgeführt sind. So kann der am offenen Ende des als haubenförmige Hülse ausgeführten Ventilkörpers zur radialen Führung und axialen Auflage der Rückstellfeder angeformte Kragen beispielsweise so ausgebildet werden, das der angeformte Kragen gleichzeitig als Führungsmittel zur radialen Führung des Stößels wirkt.

In weiterer Ausgestaltung des erfindungsgemäßen Magnetventils ist der als haubenförmige Hülse ausgeführte Ventilkörper so in den Ventileinsatz eingepresst, dass die mindestens eine radiale Abströmöffnung des Ventilkörpers mit mindestens einer korrespondierenden radialen Abströmöffnung im Ventileinsatz fluchtet. Lage, Anzahl und Form der Ausströmöffnungen des Ventilkörpers können in vorteilhafter Weise mit den Ausströmöffnungen des umgebenden Ventileinsatzes abgestimmt werden, um eine Überdeckung der Ausströmöffnungen zu vermeiden.

In alternativer Ausgestaltung kann der Ventileinsatz verkürzt ausgeführt werden, wobei der als haubenförmige Hülse ausgeführte Ventilkörper so in den Ventileinsatz eingepresst ist, dass die mindestens eine radiale Abströmöffnung nicht vom Ventileinsatz überdeckt ist. Dadurch wird in vorteilhafter Weise ein Montageprozess des Ventilkörpers erleichtert, da dieser nicht mehr gerichtet und passend zu Abströmöffnungen des Ventileinsatzes montiert werden muss.

In weiterer Ausgestaltung des erfindungsgemäßen Magnetventils ist der Ventilkörper zur Abdichtung mit dem haubenförmigen Ende an einem Einpressbereich mit einem Fluidblock verpresst. Das bedeutet, dass der Ventilkörper zur metallischen Abdichtung an einer Stelle zwischen den Fluidanschlüssen des Magnetventils im Fluidblock eingepresst wird. Dadurch können die Komplexität der Ventilpatrone reduziert und Kosten eingespart werden. Zur weiteren Reduzierung der Komplexität der Magnetventilkomponenten kann der Ventileinsatz als einteilige geschlitzte Hülse ausgeführt werden, die beispielsweise durch Einrollen eines Blechstreifens hergestellt wird.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

### Kurze Beschreibung der Zeichnungen

Fig. 1 zeigt eine schematische Schnittdarstellung eines herkömmlichen Magnetventils.
Fig. 2 zeigt eine schematische Schnittdarstellung eines ersten Ausführungsbeispiels eines erfindungswesentlichen Bereichs eines Magnetventils.
Fig. 3 zeigt eine schematische Schnittdarstellung eines zweiten Ausführungsbeispiels eines erfmdungswesentlichen Bereichs eines Magnetventils.
Fig. 4 zeigt eine schematische Schnittdarstellung eines dritten Ausführungsbeispiels eines erfindungswesentlichen Bereichs eines Magnetventils.

### Ausführungsformen der Erfindung

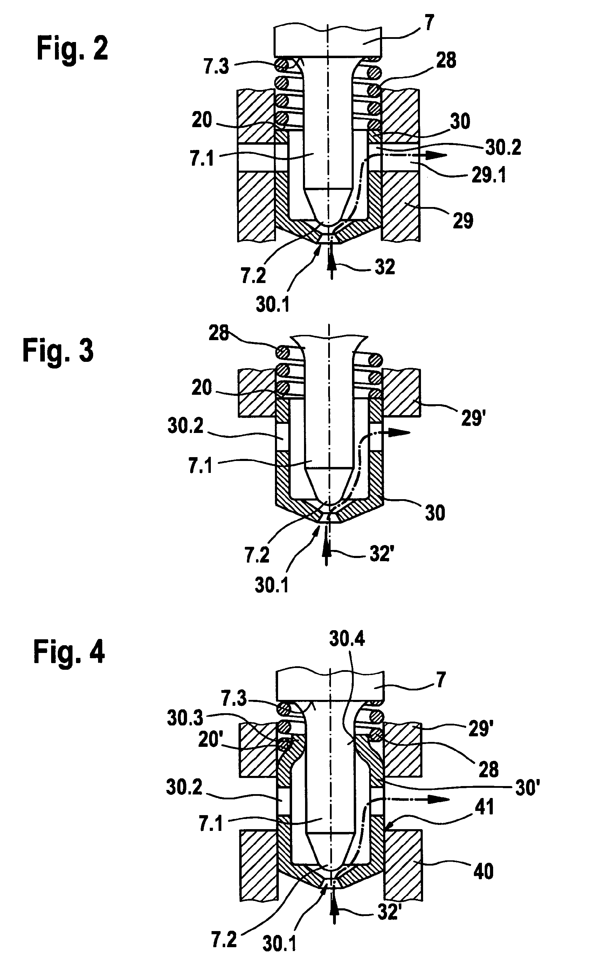

Wie aus Fig. 2 bis 4 ersichtlich ist, ist ein Ventilkörper 30, 30' eines erfindungsgemäßen Magnetventils als haubenförmige Hülse ausgeführt, deren offenes Ende in einen Ventileinsatz 29, 29' eingepresst ist und als Federauflage 20, 20' für eine Rückstellfeder 28 wirkt, die außerhalb eines Fluidflusses 32, 32' angeordnet ist und auf der ein Stößel 7 mit einer Stößelschulter 7.3 aufliegt. Der Fluidfluss 32, 32' tritt beispielsweise zwischen einem geöffneten Hauptventilsitz 30.1 und mindestens einer radialen Abströmöffnung 30.2 in dem als haubenförmige Hülse ausgeführten Ventilkörper 30, 30' auf Wie weiter aus Fig. 2 bis 4 ersichtlich ist, ist der Hauptventilsitz 30.1 mit einer Durchgangsöffnung innen an einem haubenförmigen Ende des als Hülse ausgeführten Ventilkörpers 30, 30' angeordnet. Zudem kann ein nicht dargestellter Anker, der durch eine von einer nicht dargestellten Magnetbaugruppe erzeugten Magnetkraft gegen die Kraft der Rückstellfeder 28 axial bewegt wird, den Stößel 7 mit einem ersten Schließelement 7.1 und einem Hauptdichtelement 7.2 so bewegen, dass das Hauptdichtelement 7.2 dichtend in den Hauptventilsitz 30.1 eintaucht. Die Magnetbaugruppe des erfindungsgemäßen Magnetventils kann analog zu der in Fig. 1 dargestellten Magnetbaugruppe 2 des herkömmlichen Magnetventils 1 ausgeführt werden.

Wie aus Fig. 2 weiter ersichtlich ist, ist der als haubenförmige Hülse ausgeführte Ventilkörper 30 bei einem ersten erfindungsgemäßen Ausführungsbeispiel so in den Ventileinsatz 29 eingepresst, dass die radialen Abströmöffnungen 30.2 des Ventilkörpers 30 mit korrespondierenden radialen Abströmöffnungen 29.1 im Ventileinsatz 29 fluchten. Lage, Anzahl und Form der radialen Ausströmöffnungen 30.2 des Ventilkörpers 30 sind in vorteilhafter Weise mit den Ausströmöffnungen 29.1 des umgebenden Ventileinsatzes 29 abgestimmt, um eine Überdeckung der radialen Ausströmöffnungen 30.2 des Ventilkörpers 30 zu vermeiden.

Wie aus Fig. 3 weiter ersichtlich ist, ist bei einem zweiten erfindungsgemäßen Ausfiihrungsbeispiel der Ventileinsatz 29' verkürzt und ohne radiale Abströmöffnungen ausgefiihrt, wobei der als haubenförmige Hülse ausgeführte Ventilkörper 30 so in den verkürzten Ventileinsatz 29' eingepresst ist, dass die radialen Abströmöffnungen 30.2 des Ventilkörpers 30 nicht vom verkürzten Ventileinsatz 29' überdeckt werden. Dadurch wird der Einpressvorgang des Ventilkörpers 30 im Vergleich mit dem ersten erfindungsgemäßen Ausführungsbeispiel in vorteilhafter Weise erleichtert, da dieser nicht mehr gerichtet und passend zu den radialen Abströmöffnungen im Ventileinsatz 29' eingepresst werden muss.

Zur radialen Führung und axialen Auflage der Rückstellfeder 28 kann am offenen Ende des als haubenförmige Hülse ausgeführten Ventilkörpers 30 beispielsweise eine nicht dargestellte Ringnut als Federauflage 20 ausgebildet werden, die umlaufend oder partiell ausgeführt ist.

Wie aus Fig. 4 weiter ersichtlich ist, ist bei einem dritten erfindungsgemäßen Ausführungsbeispiel analog zum zweiten erfindungsgemäßen Ausführungsbeispiel gemäß Fig. 3 der Ventileinsatz 29' verkürzt und ohne radiale Abströmöffnungen ausgeführt, wobei der als haubenförmige Hülse ausgeführte Ventilkörper 30' so in den verkürzten Ventileinsatz 29' eingepresst ist, dass die radialen Abströmöffnungen 30.2 des Ventilkörpers 30' nicht vom verkürzten Ventileinsatz 29' überdeckt werden. Im Unterschied zum zweiten erfinerfindungsgemäßen Ausführungsbeispiel ist am offenen Ende des als haubenförmige Hülse ausgeführten Ventilkörpers 30' zur radialen Führung und axialen Auflage der Rückstellfeder 28 ein Kragen 30.3 als Federauflage 20' angeformt, der umlaufend oder partiell ausgeführt ist. Der am offenen Ende des als haubenförmige Hülse ausgeführten Ventilkörpers 30' zur radialen Führung und axialen Auflage der Rückstellfeder 28 angeformte Kragen 30.3 ist gleichzeitig als Führungsmittel 30.4 zur radialen Führung des Stößels 7 ausgebildet.

Wie aus Fig. 4 weiter ersichtlich ist, kann der Ventilkörper 30' des zweiten bzw. dritten erfindungsgemäßen Ausführungsbeispiels zur metallischen Abdichtung mit dem haubenförmigen Ende an einem Einpressbereich 41 zwischen den Fluidanschlüssen des Magnetventils mit einem Fluidblock 40 verpresst werden. Dadurch können die Komplexität der Ventilpatrone reduziert und Kosten eingespart werden.

Zur weiteren Reduzierung der Komplexität der Magnetventilkomponenten kann der Ventileinsatz 29, 29' als einteilige geschlitzte Hülse ausgeführt werden, die beispielsweise durch Einrollen eines Blechstreifens hergestellt wird. Das erfindungsgemäße Magnetventil kann beispielsweise als stromlos offenes 2/2-Ventil ausgeführt werden.

Das erfindungsgemäße Magnetventil ermöglicht in vorteilhafter Weise eine Verlegung der Rückstellfeder aus dem Fluidströmungsbereich in einen nicht durchströmten Bereich des Magnetventils, ohne ein zusätzliches Bauelement als Federauflage zu verwenden. Dadurch wird die Federkraft der Rückstellfeder in vorteilhafter Weise nicht mehr durch die Fluidströmung beeinflusst. Zudem wird durch die erfindungsgemäße Ausführung des Magnetventils die eingestellte Einbaulänge der Rückstellfeder zwischen einer Stößelschulter und der Federauflage des Ventilkörpers in vorteilhafter Weise nicht verändert, wenn zur Einstellung eines Luftspaltes zwischen einem Anker und dem Ventileinsatz der Ventilkörpers und der Stößel, der über ein Hauptdichtelement an einem Hauptventilsitz des Ventilkörpers anliegt, innerhalb des Ventileinsatzes gemeinsam verschoben werden. Dadurch können in vorteilhafter Weise eine Verringerung der Prozesskomplexität und eine höhere Präzision bei der Ventileinstellung erreicht werden.

## Patentansprüche

1. Magnetventil mit einer Magnetbaugruppe (2) und einer Ventilpatrone (5), die eine Kapsel (5.1), einen mit der Kapsel (5.1) verbundenen Ventileinsatz (29, 29'), einen innerhalb der Kapsel (5.1) beweglich angeordneten Anker (6), der einen Stößel (7) mit einem ersten Schließelement (7.1) und einem Hauptdichtelement (7.2) umfasst, und einen Ventilkörper (30, 30') mit einem Hauptventilsitz (30.1) umfasst, der in den Ventileinsatz (29, 29') eingepresst ist, wobei eine von der Magnetbaugruppe (2) erzeugte Magnetkraft den Anker (6) gegen die Kraft einer Rückstellfeder (28), die außerhalb eines Fluidflusses (32, 32') angeordnet ist, axial bewegt und das Hauptdichtelement (7.2) dichtend in den Hauptventilsitz (30.1) eintaucht, **dadurch gekennzeichnet, dass** der Ventilkörper (30, 30') als haubenförmige Hülse ausgeführt ist, deren offenes Ende in den Ventileinsatz (29, 29') eingepresst ist und als Federauflage (20, 20') für die außerhalb des Fluidflusses (32, 32') angeordnete Rückstellfeder (28) wirkt, wobei der Fluidfluss (32, 32') zwischen dem geöffneten Hauptventilsitz (30.1) und mindestens einer radialen Abströmöffnung (30.2) in dem als haubenförmige Hülse ausgeführten Ventilkörper (30, 30') vorliegt, wobei der Hauptventilsitz (30.1) mit einer Durchgangsöffnung innen an einem haubenförmigen Ende des als haubenförmige Hülse ausgeführten Ventilkörpers (30, 30') angeordnet ist.

2. Magnetventil nach Anspruch 1, **dadurch gekennzeichnet, dass** am offenen Ende des als haubenförmige Hülse ausgeführten Ventilkörpers (30) zur radialen Führung und axialen Auflage der Rückstellfeder (28) eine Ringnut als Federauflage (20) ausgebildet ist, die umlaufend oder partiell ausgeführt ist.

3. Magnetventil nach Anspruch 1, **dadurch gekennzeichnet, dass** am offenen Ende des als haubenförmige Hülse ausgeführten Ventilkörpers (30') zur radialen Führung und axialen Auflage der Rückstellfeder (28) ein Kragen (30.3) als Federauflage (20)angeformt ist, der umlaufend oder partiell ausgeführt ist.

4. Magnetventil nach einem der Ansprüche 1 bis 3, **dadurch gekennzeichnet, dass** am offenen Ende des als haubenförmigen Hülse ausgeführten Ventilkörpers (30') Führungsmittel (30.4) zur radialen Führung des Stößels (7) angeformt sind, die umlaufend oder partiell ausgeführt sind.

5. Magnetventil nach Anspruch 4, **dadurch gekennzeichnet, dass** der am offenen Ende des als haubenförmigen Hülse ausgeführten Ventilkörpers (30') zur radialen Führung und axialen Auflage der Rückstellfeder (28) angeformte Kragen (30.3) gleichzeitig als Führungsmittel (4) zur radialen Führung des Stößels (7) ausgebildet ist.

6. Magnetventil nach einem der Ansprüche 1 bis 5, **dadurch gekennzeichnet, dass** der als haubenförmige Hülse ausgeführte Ventilkörper (30) so in den Ventileinsatz (29) eingepresst ist, dass die mindestens eine radiale Abströmöffnung (30.2) des Ventilkörpers (30) mit mindestens einer korrespondierenden radialen Abströmöffnung (29.1) im Ventileinsatz (29) fluchtet.

7. Magnetventil nach einem der Ansprüche 1 bis 5, **dadurch gekennzeichnet, dass** der Ventileinsatz (29') verkürzt ausgeführt ist, wobei der als haubenförmige Hülse ausgeführte Ventilkörper (30, 30') so in den Ventileinsatz (29') eingepresst ist, dass die mindestens eine radiale Abströmöffnung (30.2) außerhalb des Ventileinsatzes (29') angeordnet ist.

8. Magnetventil nach einem der Ansprüche 1 bis 7, **dadurch gekennzeichnet, dass** der Ventilkörper (30') zur metallischen Abdichtung an einem Einpressbereich (41) mit einem Fluidblock (40) verpressbar ist.

9. Magnetventil nach einem der Ansprüche 1 bis 8, **dadurch gekennzeichnet, dass** der Ventileinsatz (29, 29') als einteilige geschlitzte Hülse ausgeführt ist.

10. Magnetventil nach Anspruch 9, **dadurch gekennzeichnet, dass** der als einteilige geschlitzte Hülse ausgeführte Ventileinsatz (29, 29') durch Einrollen eines Blechstreifens hergestellt ist.

## Claims

1. Solenoid valve with a magnet assembly (2) and a valve cartridge (5) which comprises a capsule (5.1), a valve insert (29, 29') connected to the capsule (5.1), an armature (6) which is arranged movably within the capsule (5.1) and comprises a tappet (7) with a first closing element (7.1) and a main sealing element (7.2) and a valve body (30, 30') with a main valve seat (30.1) which is pressed into the valve insert (29, 29'), wherein a magnetic force generated by the magnet assembly (2) moves the armature (6) axially counter to the force of a restoring spring (28) which is arranged outside a fluid flow (32, 32') and the main sealing element (7.2) dips into the main valve seat (30.1) in a sealing manner, **characterized in that** the valve body (30, 30') is designed as a hood-shaped sleeve, the open end of which is pressed into the valve insert (29, 29') and acts as a spring seating (20, 20') for the restoring spring (28) arranged outside the fluid flow (32, 32'), wherein the fluid flow (32, 32') is present between the open main valve seat (30.1) and at least one radial outflow opening (30.2) in the valve seat (30, 30') which is designed as a hood-shaped sleeve, wherein the main valve seat (30.1) with a passage opening on the inside is arranged at a hood-shaped end of the valve body (30, 30') designed as a hood-shaped sleeve.

2. Solenoid valve according to Claim 2, **characterized in that**, for the radial guidance and axial seating of the restoring spring (28), an annular groove, which is of encircling or partially encircling design, is designed as a spring seating (20) at the open end of the valve body (30) designed as a hood-shaped sleeve.

3. Solenoid valve according to Claim 1, **characterized in that**, for the radial guidance and axial seating of the restoring spring (28), a collar (30.3), which is of encircling or partially encircling design, is integrally formed as a spring seating (20') at the open end of the valve body (30') designed as a hood-shaped sleeve.

4. Solenoid valve according to one of Claims 1 to 3, **characterized in that** guide means (30.4), which are of encircling or partially encircling design, for the radial guidance of the tappet (7) are integrally formed at the open end of the valve body (30') designed as a hood-shaped sleeve.

5. Solenoid valve according to Claim 4, **characterized in that** the collar (30.3) which is integrally formed at the open end of the valve body (30'), which is designed as a hood-shaped sleeve, for the radial guidance and axial seating of the restoring spring (28) is designed at the same time as a guide means (4) for the radial guidance of the tappet (7).

6. Solenoid valve according to one of Claims 1 to 5, **characterized in that** the valve body (30) designed as a hood-shaped sleeve is pressed into the valve insert (29) in such a manner that the at least one radial outflow opening (30.2) of the valve body (30) is aligned with at least one corresponding radial outflow opening (29.1) in the valve insert (29).

7. Solenoid valve according to one of Claims 1 to 5, **characterized in that** the valve insert (29') is of shortened design, wherein the valve body (30, 30') designed as a hood-shaped sleeve is pressed into the valve insert (29') in such a manner that the at least one radial outflow opening (30.2) is arranged outside the valve insert (29').

8. Solenoid valve according to one of Claims 1 to 7, **characterized in that**, for the metallic sealing, the valve body (30') is pressable against a press-in region (41) with a fluid block (40).

9. Solenoid valve according to one of Claims 1 to 8, **characterized in that** the valve insert (29, 29') is designed as a single-part, slotted sleeve.

10. Solenoid valve according to Claim 9, **characterized in that** the valve insert (29, 29') designed as a single-part, slotted sleeve is produced by rolling up a sheet-metal strip.

## Revendications

1. Électrovanne comprenant un module magnétique (2) et une cartouche de soupape (5) qui comprend une capsule (5.1), un insert de soupape (29, 29') connecté à la capsule (5.1), un induit (6) disposé de manière mobile à l'intérieur de la capsule (5.1), lequel comprend un poussoir (7) avec un premier élément de fermeture (7.1) et un élément d'étanchéité principal (7.2), et un corps de soupape (30, 30') avec un siège de soupape principal (30.1) qui est enfoncé dans l'insert de soupape (29, 29'), une force magnétique générée par le module magnétique (2) déplaçant axialement l'induit (6) à l'encontre de la force d'un ressort de rappel (28) disposé à l'extérieur d'un flux de fluide (32, 32') et l'élément d'étanchéité principal (7.2) plongeant de manière hermétique dans le siège de soupape principal (30.1), **caractérisée en ce que** le corps de soupape (30, 30') est réalisé sous forme de douille en forme de capot, dont l'extrémité ouverte est enfoncée dans l'insert de soupape (29, 29') et agit en tant qu'appui de ressort (20, 20') pour le ressort de rappel (28) disposé à l'extérieur du flux de fluide (32, 32'), le flux de fluide (32, 32') étant disposé entre le siège de soupape principal ouvert (30.1) et au moins une ouverture de sortie d'écoulement radiale (30.2) dans le corps de soupape (30, 30') réalisé sous forme de douille en forme de capot, le siège de soupape principal (30.1) étant disposé avec une ouverture de passage à l'intérieur au niveau d'une extrémité en forme de capot du corps de soupape (30, 30') réalisé sous forme de douille en forme de capot.

2. Électrovanne selon la revendication 1, **caractérisée en ce qu'**une rainure annulaire servant d'appui de ressort (20) est réalisée à l'extrémité ouverte du corps de soupape (30) réalisé sous forme de douille en forme de capot pour le guidage radial et l'appui axial du ressort de rappel (28), laquelle rainure annulaire est réalisée sous forme périphérique ou partielle.

3. Électrovanne selon la revendication 1, **caractérisée en ce qu'**un collet (30.3) servant d'appui de ressort (20') est façonné à l'extrémité ouverte du corps de soupape (30') réalisé sous forme de douille en forme de capot pour le guidage radial et l'appui axial du ressort de rappel (28), lequel collet est réalisé sous forme périphérique ou partielle.

4. Électrovanne selon l'une quelconque des revendications 1 à 3, **caractérisée en ce que** des moyens de guidage (30.4) sont façonnés à l'extrémité ouverte du corps de soupape (30') réalisé sous forme de douille en forme de capot pour le guidage radial du poussoir (7), lesquels moyens de guidage sont réalisés sous forme périphérique ou partielle.

5. Électrovanne selon la revendication 4, **caractérisée en ce que** le collet (30.3) façonné à l'extrémité ouverte du corps de soupape (30') réalisé sous forme de douille en forme de capot pour le guidage radial et l'appui axial du ressort de rappel (28) est en même temps réalisé sous forme de moyen de guidage (4) pour le guidage radial du poussoir (7).

6. Électrovanne selon l'une quelconque des revendications 1 à 5, **caractérisée en ce que** le corps de soupape (30) réalisé sous forme de douille en forme de capot est enfoncé dans l'insert de soupape (29) de telle sorte que l'au moins une ouverture de sortie d'écoulement radiale (30.2) du corps de soupape (30) soit en affleurement avec au moins une ouverture de sortie d'écoulement radiale correspondante (29.1) dans l'insert de soupape (29).

7. Électrovanne selon l'une quelconque des revendications 1 à 5, **caractérisée en ce que** l'insert de soupape (29') est réalisé sous forme raccourcie, le corps de soupape (30, 30') réalisé sous forme de douille en forme de capot étant enfoncé dans l'insert de soupape (29') de telle sorte que l'au moins une ouverture de sortie d'écoulement radiale (30.2) soit disposée à l'extérieur de l'insert de soupape (29').

8. Électrovanne selon l'une quelconque des revendications 1 à 7, **caractérisée en ce que** le corps de soupape (30') peut être pressé en vue de réaliser une étanchéité métallique contre une région de pressage (41) avec un bloc fluidique (40).

9. Électrovanne selon l'une quelconque des revendications 1 à 8, **caractérisée en ce que** l'insert de soupape (29, 29') est réalisé sous forme de douille fendue d'une seule pièce.

10. Électrovanne selon la revendication 9, **caractérisée en ce que** l'insert de soupape (29, 29') réalisé sous forme de douille fendue d'une seule pièce est fabriqué par enroulement d'une bande de tôle.
